(19) Europäisches Patentamt
European Patent Office
Office européen des brevets

(11) EP 4 361 341 A1

(12) **EUROPEAN PATENT APPLICATION**
published in accordance with Art. 153(4) EPC

(43) Date of publication:
**01.05.2024 Bulletin 2024/18**

(21) Application number: **22828172.1**

(22) Date of filing: **01.06.2022**

(51) International Patent Classification (IPC):
***D06L 1/02*** *(2006.01)* ***D06M 10/00*** *(2006.01)*

(52) Cooperative Patent Classification (CPC):
**D06L 1/02; D06L 1/04; D06M 10/00;** Y02P 70/62

(86) International application number:
**PCT/JP2022/022291**

(87) International publication number:
**WO 2022/270254 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 JP 2021102928**

(71) Applicants:
- **Izawa Towel Co., Ltd.**
  **Tokyo 150-0021 (JP)**
- **NATIONAL UNIVERSITY CORPORATION KYOTO INSTITUTE OF TECHNOLOGY**
  **Kyoto-shi, Kyoto 606-8585 (JP)**

(72) Inventors:
- **IZAWA Shoji**
  **Tokyo 150-0021 (JP)**
- **OKUBAYASHI Satoko**
  **Kyoto-shi, Kyoto 606-8585 (JP)**
- **HEBA MEHANY MOHAMED IBRAHIM GHANAYEM**
  **Kyoto-shi, Kyoto 606-8585 (JP)**

(74) Representative: **Mewburn Ellis LLP**
**Aurora Building**
**Counterslip**
**Bristol BS1 6BX (GB)**

# (54) METHOD FOR SCOURING FIBER PRODUCT AND METHOD FOR SCOURING FIBER PRODUCT TO PRODUCE SCOURED FIBER PRODUCT

(57) An object of the present invention to realize a step of producing an environmentally friendly textile product using a solvent in place of conventionally used water or an organic solvent in a textile product scouring step. A method according to one aspect of the present invention includes a step (a) of bringing a fluid containing supercritical carbon dioxide into contact with the textile product to remove part or all substances adhered to a surface of the textile product.

**Fig. 3**

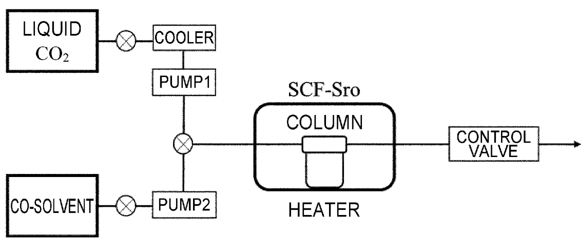




Processed by Luminess, 75001 PARIS (FR)

## Description

### Technical Field

**The** present invention relates to a method of scouring a textile product and a method of scouring a textile product to produce a scouring-treated textile product.

### Background Art

Cotton is one of highly evaluated natural fibers, and is composed of pure cellulose (88 to 96.5 weight%) and other non-cellulose impurities such as waxes, pectins, hemicelluloses, and proteins. A wax having an amount of 0.4 to 1 weight% and being mainly present in the outermost layer of an unbleached cotton fiber is a material that most affects the hydrophilicity of cotton. Unbleached cotton fibers are subjected to a treatment called scouring, whereby natural hydrophobic impurities are removed and the hydrophilicity of the cotton is improved.

Generally, cotton product woven fabrics are produced by interlacing warp yarns/weft yarns. Therefore, first, producing a woven fabric starts with dividing grey yarns into warp yarns and weft yarns. Grey yarns divided into warp yarns and weft yarns are passed through various steps. Finally, the woven fabric, put on a weaving machine and finished, is inspected and subjected to a finishing step. The main steps for cotton product production are respective steps of spinning, sizing, weaving, desizing/scouring/bleaching, dyeing, and finishing. Among these steps, in respective steps of sizing, desizing/scouring, and dyeing, a large amount of water is used, and at the same time, a large amount of wastewater is discharged. It is known that the amount of wastewater discharged when clothes are produced is 20% of the world’s wastewater. Reduction in the environmental load is a worldwide main issue and an environmentally friendly producing step that addresses such a wastewater problem is required.

In addition, in the above scouring step for cotton product production, a scouring method in which an organic solvent is used is known. However, an increase in the amount of the organic solvent used is not preferable in terms of reducing the environmental load, and similar to the above wastewater problem, it is necessary to reduce the amount of the organic solvent used to implement an environmentally friendly producing step.

In addition, it is known to perform fiber processing using supercritical carbon dioxide. The supercritical state can be expressed as a state of exceeding a critical temperature (Tc) and a critical pressure (Tp) unique to each compound. A fluid in this state is called a supercritical fluid, and has properties intermediate between a gas and a liquid. As shown in Fig. 1, carbon dioxide has advantages that it has a Tc of 31.1°C and a Tp of 7.38 MPa, it can exhibit a supercritical state under relatively mild conditions, and it is non-explosive, non-toxic, highly safe, inexpensive and easy to obtain. In addition, the supercritical carbon dioxide has following features: (1) the density fluctuates greatly if a pressure is slightly changed near the critical temperature, (2) due to its low viscosity and high diffusibility, it has excellent transportability and penetrates highly powerfully into substances, (3) it has high thermal conductivity and a high heat transfer rate, (4) it has a faster reaction rate due to a solvation effect, (5) it is a favorable solvent for a non-polar organic substance because it has a smaller dielectric constant than water, and is comparable to general non-polar organic solvents, and (5) it is possible to recover and reuse carbon dioxide.

### Summary

Technical Problem

**As** described above, in a textile product scouring step, it is desirable to realize a step of producing an environmentally friendly textile product using a solvent in place of conventionally used water or an organic solvent.

An object of the present invention is to realize a step of producing an environmentally friendly textile product using a solvent in place of conventionally used water or an organic solvent in a textile product scouring step.

Solution to Problem

The inventors conducted extensive studies in order to address the above problem, and as a result, found that the above problem can be addressed using a supercritical state carbon dioxide as a solvent in place of conventionally used water or an organic solvent, and completed the present invention. From the above features (1) to (5) of supercritical carbon dioxide, when supercritical carbon dioxide is used as a solvent in a scouring step, it is possible to realize a producing step in which no wastewater is generated, and no organic solvent is used or the amount used is reduced.

Specific aspects of the present invention are as follows.

[1] A method of scouring a textile product, the method including

a step (a) of bringing a fluid containing supercritical carbon dioxide into contact with the textile product to remove part or all substances adhered to a surface of the textile product.

[2] A method of scouring a textile product to produce a scouring-treated textile product, the method including

a step (a') of bringing a fluid containing supercritical carbon dioxide into contact with the textile product before a scouring treatment to remove part or all substances adhered to a surface of the textile product before the scouring treatment.

[3] The method according to [1] or [2],

wherein the fluid further contains a co-solvent.

[4] The method according to [3],

wherein the co-solvent contains at least one selected from the group consisting of ethanol, methanol, acetone, and tetrahydrofuran.

[5] The method according to any one of [1] to [4],

wherein the fluid further contains a surfactant.

[6] The method according to [5],

wherein the surfactant includes a nonionic surfactant.

[7] The method according to any one of [1] to [6],

wherein the textile product contains a cotton yarn or a cotton fabric.

[8] The method according to any one of [1] to [7], further including

a step of irradiating the textile product before a scouring treatment with an electron beam before the step (a) or (a').

Advantageous Effects of Invention

In the method of the present invention, it is possible to realize a step of producing an environmentally friendly textile product using a solvent in place of conventionally used water or an organic solvent in a textile product scouring step.

**Brief Description of Drawings**

Fig. 1 is a temperature-pressure state diagram of carbon dioxide.

Fig. 2(a) is a photograph of a high-pressure container, and Fig. 2(b) is a photograph of the high-pressure container set in an oven.

Fig. 3 is a diagram showing an outline of a device used in an example for a treatment with supercritical carbon dioxide.

Fig. 4 shows graphs of the effects of the concentration of a surfactant and the type of a co-solvent on the weight loss and water absorption of woven fabrics.

Fig. 5 shows graphs of the weight loss and water wettability of woven fabrics in a combination of electron beam irradiation and a treatment with only supercritical carbon dioxide.

Fig. 6 shows graphs of the weight loss and water wettability of woven fabrics in a combination of electron beam irradiation and a treatment with a mixture containing supercritical carbon dioxide and a co-solvent (methanol).

Fig. 7 shows graphs of the weight loss and water wettability of woven fabrics in a combination of electron beam irradiation and a treatment with a mixture containing supercritical carbon dioxide and a surfactant.

Fig. 8 shows graphs of the weight loss and water wettability of woven fabrics in a combination of electron beam irradiation and a treatment with a mixture containing supercritical carbon dioxide, a co-solvent (methanol), and a surfactant.

Fig. 9 shows SEM images of an untreated woven fabric and woven fabrics treated with various mixtures of supercritical carbon dioxide.

Fig. 10 shows SEM images of woven fabrics treated with various mixtures of supercritical carbon dioxide after being irradiated with an electron beam.

Fig. 11 shows SEM images of woven fabrics treated with various mixtures of supercritical carbon dioxide after being irradiated with an electron beam.

Fig. 12 shows SEM images of woven fabrics treated with various mixtures of supercritical carbon dioxide after being irradiated with an electron beam.

**Description of Embodiments**

In the present invention, "scouring" means a treatment for removing some or all substances such as oils, pastes, and natural fiber-derived waxes adhered to a textile product. In the present invention, when a numerical range is expressed using "X to Y", the range includes the numerical values at both ends.

Hereinafter, a method of scouring a textile product and a method of scouring a textile product to produce a scouring-treated textile product according to the present invention will be described.

[Method of scouring textile product and method of scouring textile product to produce scouring-treated textile product]

One embodiment of the present invention is a method of scouring a textile product, including a step (a) of bringing a fluid containing supercritical carbon dioxide into contact with the textile product to remove some or all substances adhered to the surface of the textile product. In addition, another embodiment of the present invention is a method of scouring a textile product to produce a scouring-treated textile product, including a step (a') of bringing a fluid containing supercritical carbon dioxide into contact with the textile product before a scouring treatment to remove some or all substances adhered to the surface of the textile product before the scouring treatment.

In the present embodiment, the textile product is not particularly limited, and examples thereof include fibers, yarns, and fabrics. Examples of fibers include tows before they become yarns. The yarns are not particularly limited, and examples thereof include spun yarns, filament yarns, and mixed twisted yarns and blended yarns obtained by mixing and twisting them. Examples of fabrics include woven fabrics and knit fabrics using yarns, non-woven fabrics, and felts. In the method of the present embodiment, it is preferable to use a yarn or a fabric as a textile product.

**The** type of yarn is not particularly limited, and for example, natural fibers, for examples, vegetable fibers such as cotton and linen, and animal fibers such as silk and wool, and chemical fibers, for example, synthetic fibers such as polyester and acrylic, semi-synthetic fibers such as acetate, triacetate, and promix, regenerated fibers such as rayon, polynosic, cupra, and lyocell, and inorganic fibers such as glass fibers, metal fibers, and carbon fibers can be used. Two or more types of these yarns that are blended or twisted together may be used. In addition, these yarns may be single yarns, two ply yarns, three ply yarns or four or more twisted yarns. In the present embodiment, the textile product preferably contains a cotton yarn or a cotton fabric because it is suitable for producing towels. When the textile product contains a cotton yarn or a cotton fabric, and is subjected to scouring, some or all of the hydrophobic impurities present on the surface of the cotton are removed, the hydrophilicity of the cotton is improved, and thus it is possible to improve the water wettability of the textile product.

In the present embodiment, treatment conditions when a fluid containing supercritical carbon dioxide is brought into contact with the textile product are not particularly limited, and in order to perform sufficient scouring, a temperature of 20 to 150°C, 25 to 130°C, or 30 to 110°C can be used, a pressure of 3 to 40 MPa, 5 to 30 MPa, or 8 to 25 MPa can be used, and a time of 1 to 800 minutes, 5 to 600 minutes, or 10 to 300 minutes can be used. The step of bringing a fluid containing supercritical carbon dioxide into contact with a textile product can be performed according to a continuous treatment.

In the present embodiment, when the scouring step is performed according to a continuous treatment, the rate of supercritical carbon dioxide flowing into a treatment container is not particularly limited, and in order to perform sufficient scouring, the flow rate is preferably 0.1 to 10 ml/min, more preferably 0.3 to 8 ml/min, and most preferably 0.5 to 6 ml/min per 1 g of fibers.

In the present embodiment, some or all substances adhered to the surface of the textile product can be removed by scouring the textile product. Examples of substances adhered to the surface of the textile product include non-cellulose impurities such as oils, pastes, waxes, pectins, hemicelluloses, and proteins and combinations of two or more thereof.

In the present embodiment, the fluid containing supercritical carbon dioxide may further contain a co-solvent. When the fluid contains a co-solvent, it is possible to further improve removability of substances adhered to the surface of the textile product than when a fluid containing no co-solvent is used, and particularly, when the textile product contains a cotton yarn or a cotton fabric, it is possible to further improve the water wettability of the textile product. The co-solvent is not particularly limited, and may include at least one selected from the group consisting of ethanol, methanol, acetone, and tetrahydrofuran. In order to improve removability of substances adhered to the surface of the textile product, the co-solvent is preferably an alcohol such as ethanol and methanol or tetrahydrofuran, and more preferably ethanol.

In the present embodiment, when a co-solvent is used, the co-solvent can be transferred as a liquid into the treatment container separately from the supercritical carbon dioxide.

When a co-solvent is used, the proportion (mol%) of the co-solvent with respect to supercritical carbon dioxide is not particularly limited, and in order to improve removability of substances adhered to the surface of the textile product, the proportion is preferably 1 to 20 mol%, more preferably 3 to 15 mol%, and most preferably 5 to 10 mol%.

In the present embodiment, when the scouring step is performed according to a continuous treatment and a co-solvent is used, the rate of the co-solvent flowing into the treatment container is not particularly limited, and in order to perform sufficient scouring, the flow rate is preferably 0.05 to 10 ml/min, more preferably 0.08 to 8 ml/min, and most preferably 0.1 to 5 ml/min per 1 g of fibers.

In the present embodiment, the fluid containing supercritical carbon dioxide may further contain a surfactant. When the fluid contains a surfactant, it is possible to further improve removability of substances adhered to the surface of the textile product than when a fluid containing no surfactant is used, and particularly, when the textile product contains a cotton yarn or a cotton fabric, it is possible to further improve the water wettability of the textile product.

In the present embodiment, the fluid containing supercritical carbon dioxide may further contain a co-solvent and a surfactant. When the fluid contains both a co-solvent and a surfactant, it is possible to further significantly improve removability of substances adhered to the surface of the textile product than when a fluid containing neither a co-solvent nor a surfactant, a fluid containing only a co-solvent, or a fluid containing only a surfactant is used, and particularly, when the textile product contains a cotton yarn or a cotton fabric, it is possible to significantly improve the water wettability of the textile product.

The surfactant is not particularly limited, and nonionic surfactants such as polyoxyethylene lauryl ether, fatty alcohol ethoxylate, and glycerin fatty acid ester, cationic surfactants such as distearyldimethylammonium chloride, and benzalkonium chloride, and anionic surfactants such as sulfate ester salts and phosphate ester salts can be used, and one of these surfactants or combinations of two or more thereof can be used. As the surfactant, a nonionic surfactant is preferable and polyoxyethylene lauryl ether is more preferable in consideration of low toxicity.

In the present embodiment, when a surfactant is used, it can be directly added into the treatment container separately from the supercritical carbon dioxide. In addition, when a surfactant and a co-solvent are used in combination, the surfactant is added to the co-solvent in advance, and the co-solvent to which the surfactant is added can be transferred as a liquid into the treatment container separately from the supercritical carbon dioxide.

When a surfactant is used, the proportion (g/L) of the surfactant(g) with respect to the entire solvent containing supercritical carbon dioxide or solvent containing supercritical carbon dioxide and a co-solvent (L) in the treatment container is not particularly limited, and in order to improve removability of substances adhered to the surface of the textile product, the proportion is preferably 0.2 to 15 g/L, more preferably 0.3 to 10 g/L, and most preferably 0.5 to 5 g/L. In the present embodiment, during the treatment with supercritical carbon dioxide, the proportion (g/L) of the surfactant in the treatment container can be maintained within the above numerical range.

In the present embodiment, the method may further include a step of irradiating the textile product before a scouring treatment with an electron beam before the step (a) or (a'). When the textile product before a scouring treatment is irradiated with an electron beam, it is possible to decompose some or all substances adhered to the surface of the textile product (such as the above non-cellulose impurities). Thereby, during a subsequent treatment with a fluid containing supercritical carbon dioxide, it is possible to more efficiently remove the substances from the surface of the textile product.

In the step of irradiating the electron beam, the electron beam irradiation dose is not particularly limited, and is preferably 1 to 500 kGy, more preferably 10 to 400 kGy, and most preferably 30 to 300 kGy in order to maintain the strength of the fiber to be irradiated, and the electron beam irradiation time is not particularly limited, and is preferably 0.1 to 5 seconds, more preferably 0.5 to 3 seconds, and most preferably 1 to 2 seconds.

In the present embodiment, the weight loss (%) of the textile product before and after the scouring treatment is not particularly limited, and may be 0.1 to 20%, 1 to 10%, or 2 to 5%. The weight loss (%) of the textile product before and after the scouring treatment can be calculated based on Formula (1) described in 3.1. of examples to be described below.

In the present embodiment, the water wettability (s, seconds) of the textile product after the scouring treatment is performed is not particularly limited, and may be 1 to 11,000 s, 3 to 1,200 s, 3 to 1,100 s, 3 to 1,000 s, 3 to 100 s, or 5 to 20 s. The water wettability (%) of the textile product after the scouring treatment is performed can be calculated based on the method described in 3.2. of examples to be described below.

**The** textile product after the scouring treatment obtained by the method according to the present embodiment exhibits a large weight loss (%) and high water wettability.

The method of the present embodiment can be used as a scouring step which is one fiber processing step, and can also be used in combination with other fiber processing steps of spinning, weaving, sizing, desizing/bleaching, dyeing, and finishing.

Examples

Hereinafter, the present invention will be described in more detail with reference to examples, but the present

invention is not limited to the content described in the examples.

1. Material

Unbleached cotton pile fabrics (commercially available from IZAWA TOWEL Co., Ltd.) were prepared. The following Table 1 shows specifications of woven fabrics.

[Table 1]

| Weight of woven fabric (g/m$^2$) | Yarn count (tex) | | | Thickness of woven fabric (mm) | Density of woven fabric (warp yarns/inchXweft yarns/inch) |
|---|---|---|---|---|---|
| | Ground warp yarn | Pile warp yarn | Weft yarn | | |
| 383 | 18.4 × 2 | 18.4 × 2 | 36.9 | 3.41 | 30X42 |

1 g of the above woven fabric was cut to a size of 4 cm×6 cm, and the ends of the cut woven fabric were sewn in order to prevent the yarn loss. The woven fabric with the sewn ends was pre-dried in a drying oven (DX302, commercially available from Yamato Scientific Co., Ltd.) at 105°C for 1 hour. In addition, nonionic surfactants having a chemical structure represented by the following Formula (1): polyoxyethylene lauryl ether (99.0%), ethanol (99.8%), methanol (99.8%), acetone (99.8%), tetrahydrofuran (99.8%), and sodium hydroxide (99.8%) (all commercially available from Nacalai Tesque, Inc.) were prepared.

[C1]

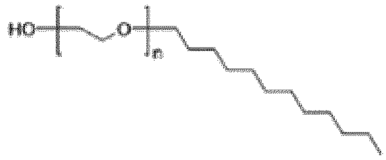

(1)

$(C_2H_4O)_nC_{12}H_{26}O$

**2.** Treatment method

2.1. Treatment with alkaline aqueous solution (conventional treatment method)

1 g ($W_{a1}$) of the pre-dried woven fabric shown in the above 1. was scoured using sodium hydroxide and the above nonionic surfactant: polyoxyethylene lauryl ether at 100°C for 120 minutes, and at a liquid ratio 1:50. The scouring was performed using a mixture containing 10 g/L of NaOH and 1.4 g/L of a surfactant (hereinafter referred to as "alkaline scoring 1"), a mixture containing 30 g/L of NaOH and 4.2 g/L of a surfactant (hereinafter referred to as "alkaline scoring 2"), or a mixture containing 30 g/L of NaOH and 30 g/L of a surfactant (hereinafter referred to as "alkaline scoring 3") as shown in Table 3 below. The scoured woven fabric was washed with water at 30°C for 10 minutes, then post-dried in an oven at 105°C for 60 minutes, and the weight (g, $W_{a2}$) of the post-dried woven fabric was measured.

2.2. Treatment with organic solvent (conventional treatment method)

0.5 g ($W_{o1}$) of the pre-dried woven fabric shown in the above 1. was put into a sealed glass container containing 240 ml of different media such as water, ethanol, methanol, acetone, tetrahydrofuran (THF), or hexane (1.2 g of the above nonionic surfactant: contains or does not contain polyoxyethylene lauryl ether), as shown in Table 3 below, and scoured using a water shaking bath (BW400, commercially available from Yamato Scientific Co., Ltd.) at 50°C for 480 minutes. The scoured woven fabric was washed with water for 10 minutes, and then washed with acetone at room temperature for 10 minutes, and post-dried in an oven at 105°C for 60 minutes, and the weight (g, $W_{o2}$) of the post-dried woven fabric was measured.

2.3. Dewaxing with supercritical carbon dioxide

2.3.1. Device and reagent

The device used in the treatment with supercritical carbon dioxide is shown in Figs. 2 and 3. Fig. 2(a) is a photograph of a high-pressure container (EV-3-50-2/4 with an inner capacity of 50 ml, commercially available from JASCO Corporation) and Fig. 2(b) is a photograph of the high-pressure container set in an oven SCF-Sro (commercially available from JASCO Corporation). Fig. 3 is a diagram showing an outline of the entire device. A liquid transfer pump that transfers carbon dioxide (PU-2086 Intelligent HPLC pump, commercially available from JASCO Corporation) and a liquid transfer pump that transfers a co-solvent (PU-2080 Intelligent HPLC pump, commercially available from JASCO Corporation) were attached to the high-pressure container. A cooling head was attached to the liquid transfer pump that transfers carbon dioxide, and carbon dioxide was kept in a liquid phase by passing a refrigerant at -10°C or lower. In addition, a fully automatic pressure control valve BP-2080 type (commercially available from JASCO Corporation) was attached to a pressure release section of the high-pressure container, and the pressure inside the high-pressure container and the rate at which carbon dioxide was released were adjusted and kept constant. For a carbon dioxide supply source, a liquefied carbon dioxide cylinder (commercially available from Kindgas Co., Ltd., a purity of 99.5% or more) was used.

2.3.2. Treatment procedure

1 g ($W_{c1}$) of the pre-dried woven fabric shown in the above 1. and a stirrer tip were put into the high-pressure container, the high-pressure container was installed in an oven SCF-Sro, and the temperature of the oven was set to 100°C. A liquefied carbon dioxide was injected into the high-pressure container at 5 ml/min for 480 minutes using a liquid transfer pump. In addition, as shown in Tables 2 and 4 below, only a co-solvent or a co-solvent containing 5, 10, or 20 g/L of the above nonionic surfactant: polyoxyethylene lauryl ether was injected into the high-pressure container at 1 ml/min and 20 MPa. In addition, as shown in the following Table 4, when only a surfactant was added without injecting a co-solvent and supercritical carbon dioxide was used, 9.6 g (4 g/L) of a surfactant was directly added to the high-pressure container before carbon dioxide flowed out. As described above, when a co-solvent contained a surfactant, the concentration of the surfactant in the mixture containing supercritical carbon dioxide and the co-solvent was estimated to be 0.83, 1.7, and 3.3 g/L. A magnetic stirrer installed in the high-pressure container was operated at 100 rpm during the treatment with supercritical carbon dioxide. After the treatment with supercritical carbon dioxide under conditions of 100°C, 20 MPa, and 480 minutes, the high-pressure container was depressurized to atmospheric pressure. Then, the woven fabric after the treatment with supercritical carbon dioxide was taken out, washed with sufficient water for 10 minutes, and washed with sufficient acetone at room temperature for 10 minutes, and then post-dried in an oven at 105°C for 60 minutes. Then, the weight ($W_{c2}$) of the post-dried woven fabric was measured.

**2.4.** Dewaxing with supercritical carbon dioxide in combination with electron beam irradiation

2.4.1. Device and reagent

Electron beam irradiation was performed using an electron beam irradiation device EPS-750 (commercially available from NHV Corporation) at atmospheric atmosphere and an acceleration voltage of 750 keV, as shown in Table 5 below, at an absorbed dose of 50, 100, or 200 kGy. Regarding the device used in the treatment with supercritical carbon dioxide, the liquid transfer pump that transfers carbon dioxide or a co-solvent, the carbon dioxide supply source and the like, those described in the above 2.3.1. were used.

2.4.2. Treatment procedure

1 g ($W_{e1}$) of the pre-dried woven fabric shown in the above 1. was put into the electron beam irradiation device, and as shown in Table 5 below, the woven fabric was irradiated with an electron beam at a dose of 50, 100, or 200 kGy. As described above, the woven fabric irradiated with an electron beam or the woven fabric not irradiated with an electron beam (1 g ($W_{e1}$) of the pre-dried woven fabric shown in the above 1.) and a stirrer tip were put into the high-pressure container, the high-pressure container was installed in an oven SCF-Sro, and the temperature of the oven was set to 100°C. The liquefied carbon dioxide was injected into the high-pressure container using a liquid transfer pump at 5 ml/min for 120, 240, or 480 minutes (the flow rate of carbon dioxide: 600, 1,200, or 2,400 ml). In addition, as shown in Table 5 below, only a co-solvent (methanol), or a co-solvent containing 5, 10, or 20 g/L of the above nonionic surfactant: polyoxyethylene lauryl ether, was injected into the high-pressure container at 1 ml/min and 20 MPa. In addition, as shown in the following Table 5, when only a surfactant was added without injecting a co-solvent and supercritical carbon dioxide was used, 9.6 g (4 g/L) of a surfactant was directly added to the high-pressure container before carbon dioxide flowed

out. As described above, when a co-solvent contained a surfactant, the concentration of the surfactant in the mixture containing supercritical carbon dioxide and a co-solvent was estimated to be 3.3 g/L. A magnetic stirrer installed in the high-pressure container was operated at 5 rpm during the treatment with supercritical carbon dioxide. After the treatment with supercritical carbon dioxide under conditions of 100°C, 20 MPa, and 120, 240, or 480 minutes, the high-pressure container was depressurized to atmospheric pressure. Then, the woven fabric after the treatment with supercritical carbon dioxide was taken out, washed with sufficient acetone at room temperature for 10 minutes and washed with sufficient water at 100°C for 10 minutes, and then post-dried in an oven at 105°C for 60 minutes. Then, the weight ($W_{e2}$) of the post-dried woven fabric was measured.

3. Evaluation

3.1. Weight loss of woven fabric

In order to confirm the extent to which waxes and other impurities were removed from the woven fabric according to each treatment described in the above 2., the weight loss (%) of the woven fabric was calculated based on the following Formula (1).

$$\text{The weight loss (\%) of the woven fabric} = 100 \times (W_{x1} - W_{x2})/W_{x1} \quad (1)$$

Here, $W_{x1}$ was the weight of the woven fabric before the treatment and after drying, and $W_{x2}$ was the weight of the woven fabric after the treatment with an alkali (x=a), an organic solvent (x=o), supercritical carbon dioxide (x=c), or electron beam irradiation and supercritical carbon dioxide (x=e) and after post-drying (each weight described in the above 2.).

3.2. Water wettability of woven fabric

The water wettability of the woven fabric was measured according to a water immersion test (EN14697: 2005 standardization) under standard laboratory conditions (20±2°C, relative humidity of 65±2%). The time from when the woven fabric was placed on the surface of water until the woven fabric was completely immersed in water was recorded. If the woven fabric had excellent water wettability (short water wettability time), the woven fabric had excellent water absorption accordingly, and for example, was suitable for use as a towel.

3.3. FE-SEM analysis

The surface condition of each woven fabric was observed using a field emission scanning electron microscope (FE-SEM JSM-701F, commercially available from JEOL Ltd.). Before observation was performed, the surface of the woven fabric was precoated with 75A gold using fine coating sputtering (FINECOAT JFC-1100E, commercially available from JEOL Ltd.) for 1 minute.

**4.** Evaluation results

The change in weight of the unbleached cotton pile fabric and its improvement in water wettability described in the above 3.1. and 3.2. were main criteria for determining effectiveness of the woven fabric dewaxing and washing process. In the present invention, the method of using supercritical carbon dioxide to extract impurities from cotton and various other conventional dewaxing methods were applied, and the type of impurities that could be removed by each method and how impurities affected the absorbency of the fabric was investigated.

4.1. Dewaxing with supercritical carbon dioxide

4.1.1. Effect of co-solvent

Table 2 shows the results obtained by performing the treatment with supercritical carbon dioxide using various co-solvents. Table 2 shows the results of no treatment and the treatment with pure supercritical carbon dioxide together. In addition, Table 3 shows the results of the above alkaline scorings 1 to 3 and the treatment with various organic solvents, which are conventional treatment methods.

[Table 2]

| Type of co-solvent | Amount | | | Weight loss of woven fabric (%) | Water wettability (s) |
|---|---|---|---|---|---|
| | Co-solvent (ml) | $CO_2$ (ml) | Surfactant (g/L) | | |
| - | - | - | - | 0.0 | 14400±0.2 |
| - | 0 | 2400 | 0 | 0.2±0.3 | 10800±0.7 |
| Ethanol | 480 | 2400 | 0 | 0.4±0.1 | 970±0.2 |
| Methanol | 480 | 2400 | 0 | 0.9±0.1 | 1080±0.5 |
| Acetone | 480 | 2400 | 0 | 0.2±0.2 | 1200±0.4 |
| Tetrahydrofuran | 480 | 2400 | 0 | 0.2±0.3 | 1080±0.6 |

[Table 3]

| Type of solvent | Surfactant (g/L) | Weight loss of woven fabric (%) | Swelling of woven fabric (%) | Water wettability (s) |
|---|---|---|---|---|
| - | 0 | 0.0 | - | 14400±0.2 |
| Alkaline scoring 1 | 1.4 | 10.6 | - | 480±0.7 |
| Alkaline scoring 2 | 4.2 | 9.9 | - | 390±0.4 |
| Alkaline scoring 3 | 30 | 16.7 | - | 33±0.6 |
| Water | 0 | 0.0 | 85.0 *1 | 3660±0.3 |
| Ethanol | 0 | 0.9 | 41.7 *1 | 1200±0.7 |
| Methanol | 0 | 2.2 | 60.5 *1 | 1200±0.4 |
| Acetone | 0 | 0.5 | 13.4 *1 | 1200±0.1 |
| Tetrahydrofuran | 0 | 1.1 | 18.3 *1 | 1200±0.3 |
| Hexane | 0 | 0.5 | - | 1200±0.8 |
| Water | 5 | 1.4 | - | 125±0.5 |
| Ethanol | 5 | 3.1 | - | 100±0.3 |
| Methanol | 5 | 1.8 | - | 45±0.4 |
| Acetone | 5 | 1.1 | - | 100±0.6 |
| Tetrahydrofuran | 5 | 1.5 | - | 120±0.5 |
| Hexane | 5 | 0.5 | - | 660±0.4 |
| *1: cited from G.I. Mantanis, R.A. Young, R.M. Rowell, Swelling of compressed cellulose fiber webs in organic liquids, Cellulose 2 (1995) 1-22 | | | | |

As shown in the results in Table 2, it was found that, although the woven fabric had no significant change in weight when treated with pure supercritical carbon dioxide, the water wettability exhibited an immersion time of 10,800 seconds, and the water wettability was more improved than that of the untreated woven fabric (an immersion time of 14,400 seconds). When treated with pure supercritical carbon dioxide, the amount of an organic solvent could be significantly reduced and the environmental load could be sufficiently reduced so that the method was thought to be a beneficial scouring method. In addition, as shown in the results in Table 2, it was found that, when the treatment with supercritical carbon dioxide using a co-solvent was performed, the water wettability was further improved. This is thought to be caused by the fact that, when a co-solvent having polarity shown in Table 2 was added, the polarity of the entire solvent containing supercritical carbon dioxide increased, the cotton was likely to swell, and the wax on the surface of cotton was likely to dissolve in the solvent. In particular, it was found that, when the treatment with supercritical carbon

dioxide using an alcohol such as methanol or ethanol or tetrahydrofuran as a co-solvent was performed, the water wettability was significantly improved. In addition, it was found that, comparing the results in Table 2 with the results of conventional treatment methods in Table 3, the water wettability after the treatment with supercritical carbon dioxide using methanol, ethanol, or tetrahydrofuran as a co-solvent (for 1,080 seconds, 970 seconds, or 1,080 seconds) was better than the water wettability after the treatment with ethanol, methanol, or tetrahydrofuran without using supercritical carbon dioxide (for 1,200 seconds). Based on the results, it was found that, when an alcohol such as methanol or ethanol or tetrahydrofuran was used as a co-solvent for supercritical carbon dioxide, it was possible to significantly improve the water wettability while reducing the amount of the organic solvent and reducing the environmental load. Regarding the results, it was speculated that an alcohol such as methanol or ethanol was more likely to swell the cotton. In addition, as shown in the results in Tables 2 and 3, it was found that the water wettability after the treatment with supercritical carbon dioxide using acetone as an co-solvent maintained the same level as the water wettability after the treatment with acetone without using supercritical carbon dioxide, it was possible to achieve excellent water wettability while reducing the amount of an organic solvent and reducing the environmental load.

4.1.2. Effect of surfactant

Table 4 shows the results obtained by the treatment with supercritical carbon dioxide using a surfactant. Table 4 shows cases in which only a surfactant was added to supercritical carbon dioxide and cases in which both a surfactant and a co-solvent were added.

[Table 4]

| Type of co-solvent | Amount | | | Weight loss of woven fabric (%) | Water wettability (3) |
|---|---|---|---|---|---|
| | Co-solvent (ml) | $CO_2$ (ml) | Surfactant (g/L) | | |
| - | - | - | - | 0.0 | 14400±0.2 |
| Alkaline scoring 3 | - | - | 30 | 16.6±0.3 | 33±0.6 |
| - | 0 | 2400 | 4 | 2.6±0.5 | 10±0.4 |
| Ethanol | 480 | 2400 | 0.83 | 2.0±0.2 | 21.0±0.4 |
| Methanol | 480 | 2400 | 0.83 | 2.2±0.2 | 11±0.3 |
| Acetone | 480 | 2400 | 0.83 | 1.9±0.4 | 30±0.2 |
| Tetrahydrofuran | 480 | 2400 | 0.83 | 2.3±0.5 | 17.5±0.4 |
| Ethanol | 480 | 2400 | 1.7 | 2.5±0.2 | 22.5±0.5 |
| Methanol | 480 | 2400 | 1.7 | 2.4±0.6 | 6.5±0.4 |
| Acetone | 480 | 2400 | 1.7 | 2.6±0.5 | 18±0.1 |
| Tetrahydrofuran | 480 | 2400 | 1.7 | 2.1±0.6 | 9.5±0.4 |
| Ethanol | 480 | 2400 | 3.3 | 2.8±0.1 | 15±0.4 |
| Methanol | 480 | 2400 | 3.3 | 3.5±0.2 | 7±0.3 |
| Acetone | 480 | 2400 | 3.3 | 2.6±0.2 | 12±0.5 |
| Tetrahydrofuran | 480 | 2400 | 3.3 | 2.7±0.4 | 9.5±0.4 |

**As** shown in Table 4, it was found that, when the treatment with supercritical carbon dioxide to which only a surfactant was added was performed, the weight loss of the woven fabric was significantly increased to 2.6%, the immersion time was shortened to 10 seconds, and favorable water wettability was exhibited. That is, it was found that, comparing the treatment with pure supercritical carbon dioxide and the treatment with supercritical carbon dioxide containing a co-solvent shown in Table 2, when the treatment with supercritical carbon dioxide to which only a surfactant was added was performed, the water wettability was further improved. Regarding the results, it was speculated that the surfactant had amphipathic properties, lipophilic groups of the surfactant were adsorbed to the wax on the fibers and incorporated into micelles, and additionally, according to the function of hydrophilic groups of the surfactant, the wax-incorporated micelles were stably dispersed in the solution, and the wax was removed from the fiber. In addition, as

shown in Table 4, it was found that, when the treatment with supercritical carbon dioxide containing both a co-solvent and a surfactant was performed, a very good dewaxing effect was obtained, and the results of the woven fabric weight loss of 1.9% to 3.5% and the water wettability for 6.5 seconds to 30 seconds were obtained. Accordingly, it was found that, when the treatment with supercritical carbon dioxide in combination with a co-solvent and a surfactant was performed, improvement in the water wettability was obtained, and particularly, when methanol was used as a co-solvent, a very good synergistic effect was obtained regardless of the concentration (g/L) of the surfactant. Regarding the results, it was thought that the co-solvent increased the polarity of supercritical carbon dioxide, swelling of cotton fibers was promoted, and the co-solvent could improve the solubility of supercritical carbon dioxide in the surfactant.

Summarizing the results shown in Tables 2 and 4, Fig. 4 shows graphs of the effects of the concentration of the surfactant and the type of the co-solvent on the weight loss and water wettability of woven fabrics. As shown in the results in Fig. 4, it was found that, regarding the weight loss (%) of the woven fabric, compared to when no surfactant was contained (0 g/L), the weight loss (%) of the woven fabric tended to increase regardless of the type of the co-solvent as the concentration of the surfactant increased to 0.83, 1.7, and 3.3 g/L. In addition, at a surfactant concentration of 0.83 and 1.7 g/L, no significant difference was observed in the weight loss (%) of the woven fabric according to the type of the co-solvent, but at a surfactant concentration of 3.3 g/L, a tendency for the weight loss (%) of the woven fabric to increase when methanol was used was observed. In addition, it was found that, regarding the water wettability (s) of the woven fabric, compared to when no surfactant was contained (0 g/L), as the surfactant concentration increased to 0.83, 1.7, and 3.3 g/L, the value of the water wettability (s) of the woven fabric tended to decrease (the water wettability was improved) regardless of the type of the co-solvent.

**4.2.** Dewaxing with supercritical carbon dioxide in combination with electron beam irradiation

Table 5 shows the results obtained by performing a treatment by changing the electron beam irradiation dose, and the amounts of supercritical carbon dioxide, a co-solvent (methanol), and a surfactant. Table 5 also shows the results without a treatment with supercritical carbon dioxide. In addition, Figs. 5 to 8 show graphs of the effects of the time for the treatment with supercritical carbon dioxide and the electron beam irradiation dose on the weight loss and water wettability of woven fabrics. Fig. 5 shows graphs of the combination of electron beam irradiation and the treatment with only supercritical carbon dioxide, Fig. 6 shows graphs of the combination of electron beam irradiation and the treatment with a mixture containing supercritical carbon dioxide and a co-solvent (methanol), Fig. 7 shows graphs of the combination of electron beam irradiation and the treatment with a mixture containing supercritical carbon dioxide and a surfactant, and Fig. 8 shows the graph of the combination of electron beam irradiation and the treatment with a mixture containing supercritical carbon dioxide, a co-solvent (methanol), and a surfactant.

[Table 5]

| Sample No. | Amount | | Surfactant (g/L) | Weight loss of woven fabric (%) | | | | Water wettability(s) | | | |
|---|---|---|---|---|---|---|---|---|---|---|---|
| | $CO_2$ | Methanol | | Electron beam dose (kGy) | | | | | | | |
| | (ml) | (ml) | | 0 | 50 | 100 | 200 | 0 | 50 | 100 | 200 |
| 1 | 0 | 0 | 0 | 0.0 | 0.0 | 0.0 | 0.0 | 14400 ± | 0.9 13990 ± 0.6 | 13760 ± 0.8 | 13750 ± 0.5 |
| 2 | 600 | 0 | 0 | 0.3 ± 0.6 | 0.6 ± 0.7 | 1.1 ± 0.2 | 1.2 ± 0.2 | 110 ± 1.8 | 83 ± 1.5 | 33 ± 1.4 | 30 ± 1.2 |
| 3 | 600 | 120 | 0 | 0.5 ± 0.3 | 0.7 ± 0.7 | 1.2 ± 0.0 | 1.9 ± 0.4 | 67 ± 1.7 | 43 ± 1.8 | 15 ± 0.8 | 11 ± 0.8 |
| 4 | 600 | 0 | 4 | 2.4 0.7 | 3.5 ±1.2 | 4.3 ± 1.6 | 4.9 ± 0.6 | 16 ± 0.6 | 14 ± 0.9 | 8 ± 0.7 | 7 ± 0.4 |
| 5 | 600 | 120 | 3.3 | 3.0 ± 0.9 | 4.5 ± 0.9 | 4.6 ± 0.4 | 5.3 ± 0.9 | 18 ± 0.8 | 10 ± 0.7 | 9 ± 0.9 | 9 ± 0.7 |
| 6 | 1200 | 0 | 0 | 04 ± 0.1 | 0.8 ± 0.8 | 0.9 ± 0.3 | 1.2 ± 0.4 | 81 ± 1.5 | 35 ± 1.2 | 30 ± 0.7 | 25 ± 1.3 |
| 7 | 1200 | 240 | 0 | 0. 7 ± 0.5 | 0.9 ± 0.2 | 1.3 ± 0.6 | 2.0 1.0 | 50 ± 1.3 | 24 ± 1.4 | 12 ± 1.4 | 10 ± 0.9 |
| 8 | 1200 | 0 | 4 | 3.0 ± 1.0 | 5.6 ± 1.0 | 6.0 ± 0.7 | 7.0 ± 0.3 | 14 ± 1.4 | 12 ± 0.9 | 7 ± 0.6 | 6 ± 0.4 |
| 9 | 1200 | 240 | 3.3 | 3.4 ± 0.9 | 5.5 ± 0.7 | 6.7 ± 1.0 | 7.5 ± 0.6 | 15 ± 1.2 | 10 ± 0.4 | 6 ± 0.8 | 5 ± 0.6 |
| 10 | 2400 | 0 | 0 | 0.6 ± 0.3 | 1.0 ± 0.6 | 1.1 ± 0.3 | 1.3 ± 0.2 | 65 ± 1.7 | 28 ± 0.9 | 26 ± 0.6 | 19 ± 0.6 |
| 11 | 2400 | 480 | 0 | 1.0 ± 0.3 | 15 ± 0.5 | 1.8 ± 0.6 | 2.0 ± 0.5 | 41 ± 1.5 | 14 ± 0.4 | 6 ± 0.9 | 4 ± 0.4 |
| 12 | 2400 | 0 | 4 | 3.2 ± 0.9 | 5.8 ± 0.3 | 6.0 ± 0.9 | 7.2 ± 0.3 | 12 ± 0.8 | 8 ± 0.7 | 5 ± 0.6 | 2 ± 0.4 |
| 13 | 2400 | 480 | 3.3 | 3.9 ± 0.8 | 6.0± 0.9 | 6.3 ± 0.4 | 7.7 ± 0.5 | 13 ± 0.8 | 10 ± 0.4 | 6 ± 0.6 | 2 ± 0.4 |

As shown in the results in Table 5, it was found that, as the dose of the electron beam increased, the value of the weight loss (%) increased, and the water wettability was improved (the value (s) of the water wettability decreased). This was thought to be caused by the fact that, when electron beam irradiation was performed before the treatment with supercritical carbon dioxide, hydrophobic impurities on the surface of the cotton were decomposed, and it was possible to improve removability of the wax and pectin during the treatment with supercritical carbon dioxide. Therefore, it was thought that, according to electron beam irradiation, it was possible to shorten the treatment time with supercritical carbon dioxide and reduce the energy used. In addition, as shown in the results in Table 5, it was found that, when the treatment with supercritical carbon dioxide using a co-solvent (methanol) was performed, the value of the weight change (%) was larger and the water wettability was more improved than the treatment with pure supercritical carbon dioxide was performed. In addition, it was found that, when the treatment with supercritical carbon dioxide using a surfactant was performed and when the treatment with supercritical carbon dioxide in combination with a co-solvent and a surfactant was performed, the value of the weight change (%) was larger and the water wettability was more improved than when the treatment with supercritical carbon dioxide using a co-solvent (methanol) was performed. In addition, as shown in the results in Figs. 5 to 8, it was found that the woven fabrics that were irradiated with an electron beam at a large dose of 100 or 200 kGy and treated with supercritical carbon dioxide all had sufficiently improved water wettability even if the treatment time with supercritical carbon dioxide was different. Based on the above results, it was found that, according to the treatment with electron beam irradiation, it was possible to reduce the treatment time and energy for dewaxing of the cotton using supercritical carbon dioxide.

4.3. Evaluation of properties of surface of woven fabric using FE-SEM

Fig. 9 shows SEM images of unbleached cotton pile fabrics and woven fabrics treated with various mixtures of supercritical carbon dioxide. Fig. 9(a) shows unbleached cotton pile fabrics before the treatment, Fig. 9(b) shows woven fabrics after the treatment according to alkaline scoring 3, Fig. 9(c) shows woven fabrics after the treatment with supercritical carbon dioxide, Fig. 9(d) shows woven fabrics after the treatment with supercritical carbon dioxide containing methanol, Fig. 9(e) shows woven fabrics after the treatment with supercritical carbon dioxide containing a surfactant, and Fig. 9(f) shows woven fabrics after the treatment with supercritical carbon dioxide containing methanol and a surfactant (the treatment times with a fluid containing supercritical carbon dioxide were all 480 minutes), which are all SEM images at a magnification of 3,000. As shown in Fig. 9(a), a waxy layer formed a thin sheet on the primary wall of unbleached cotton fibers, and visually parallel ridges and grooved were formed. In Fig. 9(b), a relatively smooth fiber surface with special and characteristic particles, striped patterns, and twists was observed in the woven fabric scoured according to conventional alkaline scoring 3. As shown in Fig. 9(c), after the treatment with pure supercritical carbon dioxide, no significant change was observed on the surface of the fiber. As shown in Fig. 9(d), after the treatment with a mixture containing supercritical carbon dioxide and a co-solvent, a slightly smooth morphology was observed on the surface of the fiber. As shown in Figs. 9(e) and 9(f), it shows that the most important morphological change was achieved on the surface of the cotton fiber treated with a mixture containing supercritical carbon dioxide and a co-solvent or a mixture containing supercritical carbon dioxide and a surfactant, and after these treatments, parallel ridges and grooves almost disappeared, and the surface of the fiber became flatter and smoother. This indicates that non-cellulose impurities were removed and pure cellulose was clearly present in the secondary wall.

Figs. 10 to 12 show SEM images of woven fabrics obtained by irradiating unbleached cotton pile fabrics with different doses of electron beams, and then as necessary, treating them with various mixtures of supercritical carbon dioxide. Figs. 10(a1) to 10(a3) show woven fabrics that were irradiated with only an electron beam and not treated with supercritical carbon dioxide, Figs. 10(b1) to 10(b3) show woven fabrics after being irradiated with an electron beam and treated with supercritical carbon dioxide, Figs. 11(c1) to 11(c3) show woven fabrics after being irradiated with an electron beam and treated with supercritical carbon dioxide containing methanol, Figs. 11(d1) to 11(d3) show woven fabrics after being irradiated with an electron beam and treated with supercritical carbon dioxide containing a surfactant, and Figs. 12(e1) to 12(e3) show woven fabrics after being irradiated with an electron beam and treated with supercritical carbon dioxide containing methanol and a surfactant (the treatment times with a fluid containing supercritical carbon dioxide were all 480 minutes), which are all SEM images at a magnification of 3,000. The dose during electron beam irradiation was 50 kGy in Figs. 10(a1) and 10(b1), Figs. 11(c1) and 11(d1), and Fig. 12(e1), 100 kGy in Figs. 10(a2) and 10(b2), Figs. 11(c2) and 11(d2), and Fig. 12(e2), and 200 kGy in Figs. 10(a3) and 10(b3), Figs. 11(c3) and 11(d3), and Fig. 12(e3). As shown in Figs. 10 to 12, when the treatment was performed at a dose of 50 kGy, the fiber had a smoother surface than the surface of the untreated fiber (unbleached cotton pile fabric), and this indicates that some impurities on the surface were decomposed. In addition, as shown in Fig. 12, it was found that the smoothness of the fiber surface increased after the treatment with various doses of electron beam irradiation and the treatment with a mixture containing supercritical carbon dioxide, methanol, and a surfactant were performed.

## Claims

1. A method of scouring a textile product, the method comprising a step (a) of bringing a fluid containing supercritical carbon dioxide into contact with the textile product to remove part or all substances adhered to a surface of the textile product.

2. A method of scouring a textile product to produce a scouring-treated textile product, the method comprising a step (a') of bringing a fluid containing supercritical carbon dioxide into contact with the textile product before a scouring treatment to remove part or all substances adhered to a surface of the textile product before the scouring treatment.

3. The method according to claim 1 or 2, wherein the fluid further contains a co-solvent.

4. The method according to claim 3, wherein the co-solvent contains at least one selected from the group consisting of ethanol, methanol, acetone, and tetrahydrofuran.

5. The method according to any one of claims 1 to 4, wherein the fluid further contains a surfactant.

6. The method according to claim 5, wherein the surfactant includes a nonionic surfactant.

7. The method according to any one of claims 1 to 6, wherein the textile product contains a cotton yarn or a cotton fabric.

8. The method according to any one of claims 1 to 7, further comprising a step of irradiating the textile product before a scouring treatment with an electron beam before the step (a) or (a').

Fig. 1

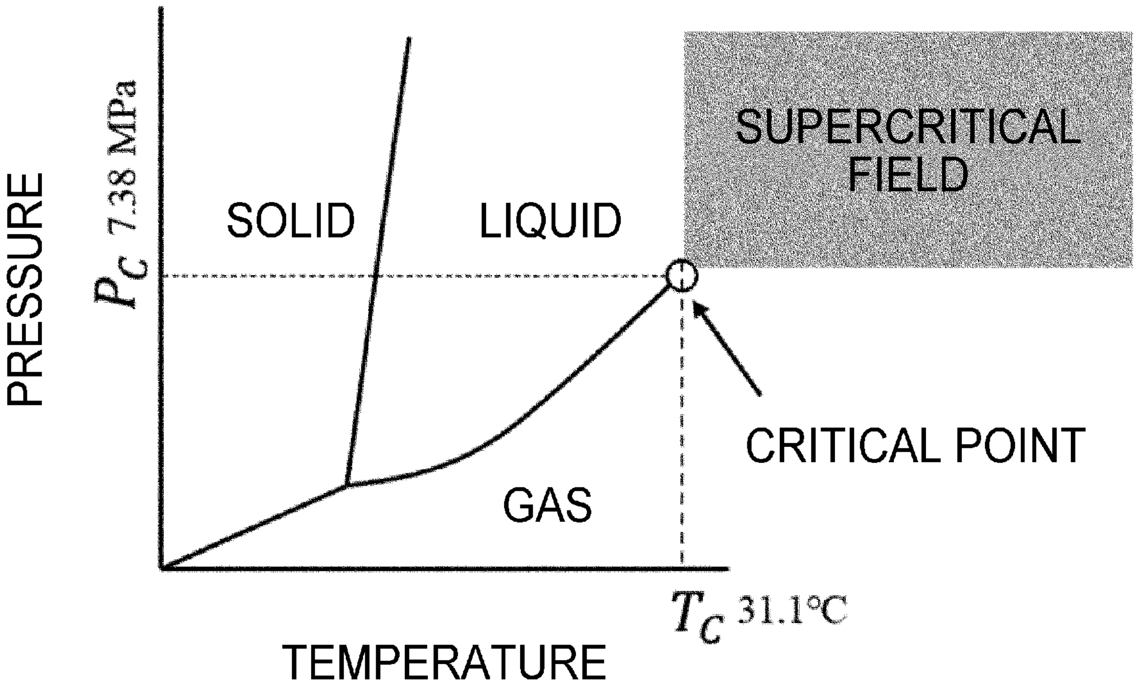
PRESSURE
$P_C$ 7.38 MPa
SOLID
LIQUID
SUPERCRITICAL FIELD
CRITICAL POINT
GAS
$T_C$ 31.1°C
TEMPERATURE

# Fig. 2

(a)

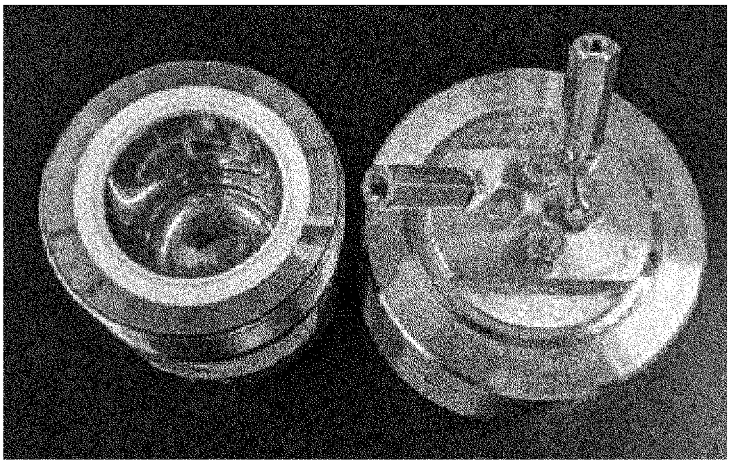

(b)

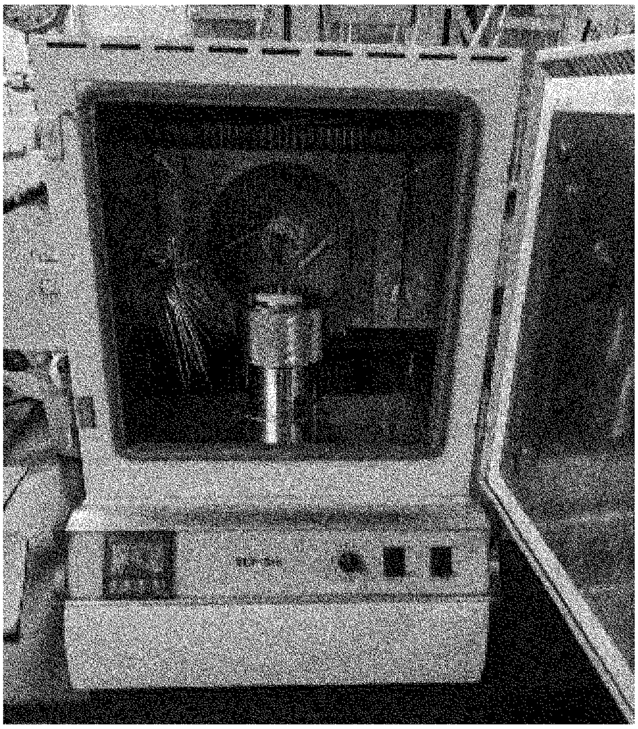

Fig. 3

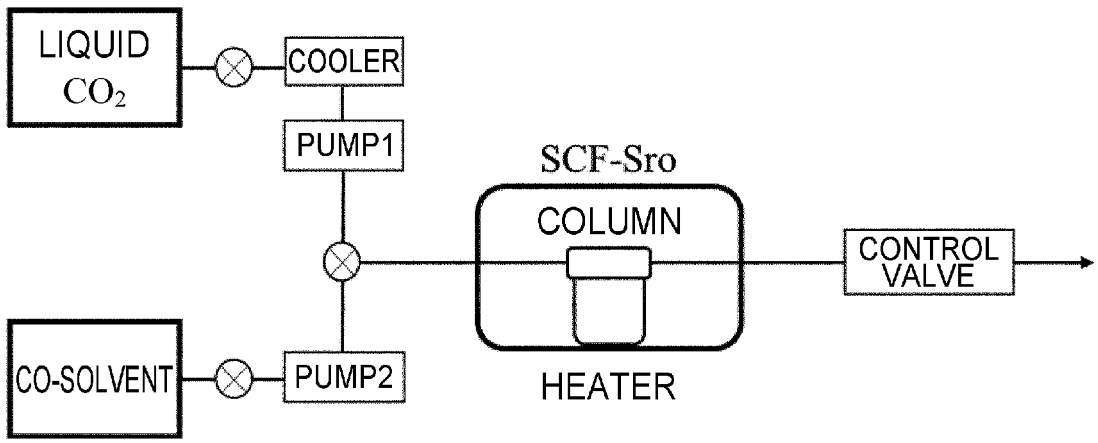
LIQUID
CO2
COOLER
PUMP1
SCF-Sro
COLUMN
CONTROL
VALVE
CO-SOLVENT
PUMP2
HEATER

# Fig. 4

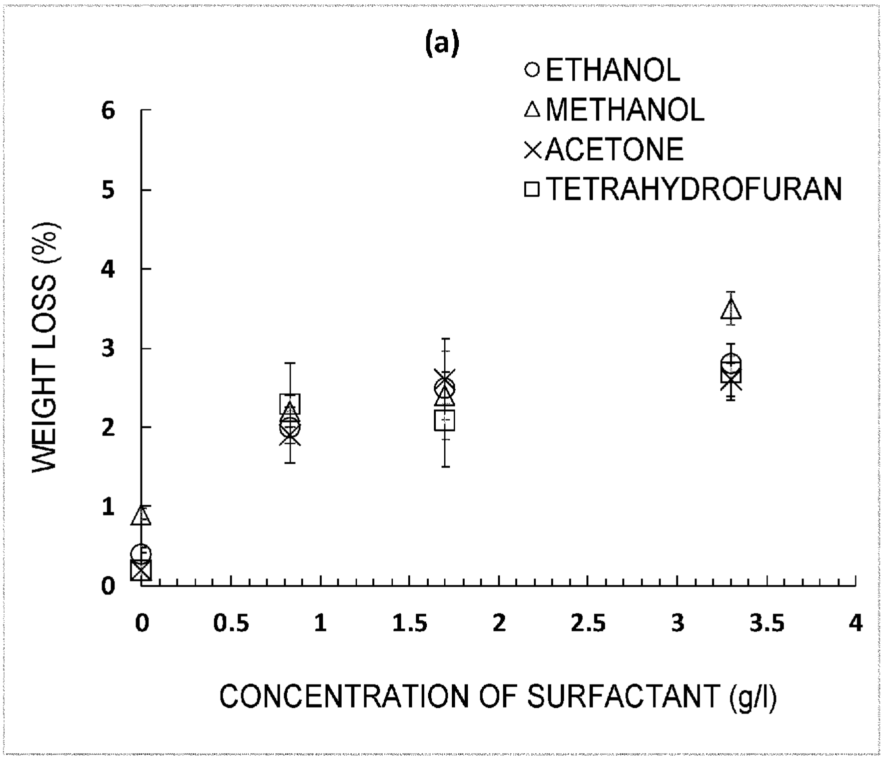
(a)
ETHANOL
METHANOL
ACETONE
TETRAHYDROFURAN
WEIGHT LOSS (%)
0
1
2
3
4
5
6
0
0.5
1
1.5
2
2.5
3
3.5
4
CONCENTRATION OF SURFACTANT (g/l)

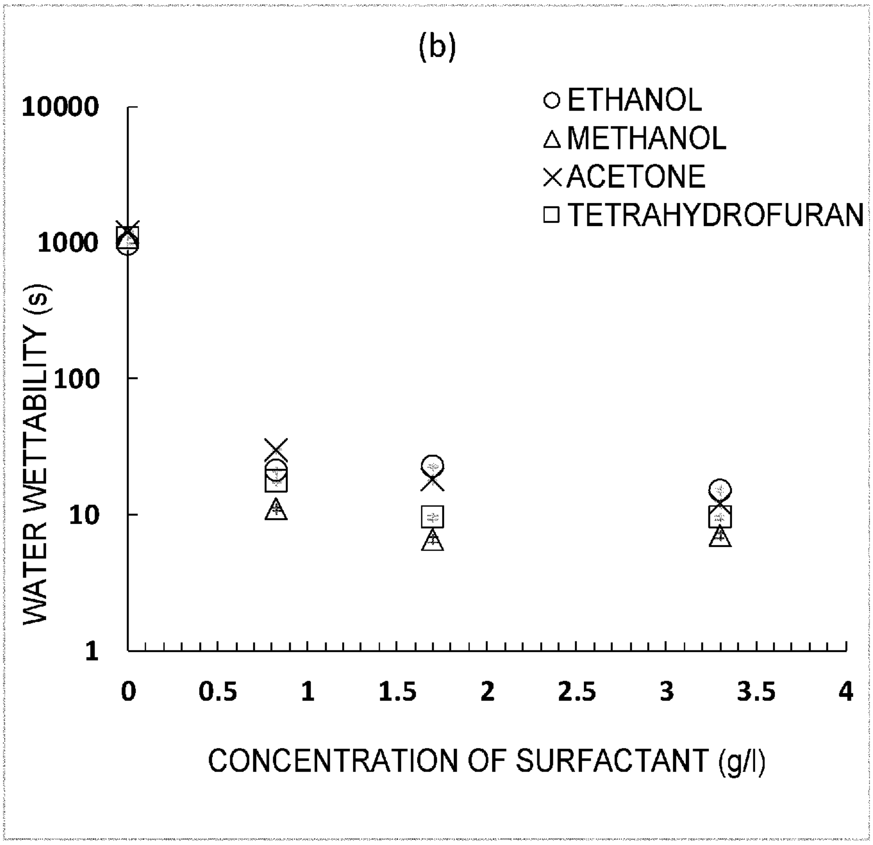
(b)
ETHANOL
METHANOL
ACETONE
TETRAHYDROFURAN
WATER WETTABILITY (s)
1
10
100
1000
10000
0
0.5
1
1.5
2
2.5
3
3.5
4
CONCENTRATION OF SURFACTANT (g/l)

# Fig. 5

(a-1)

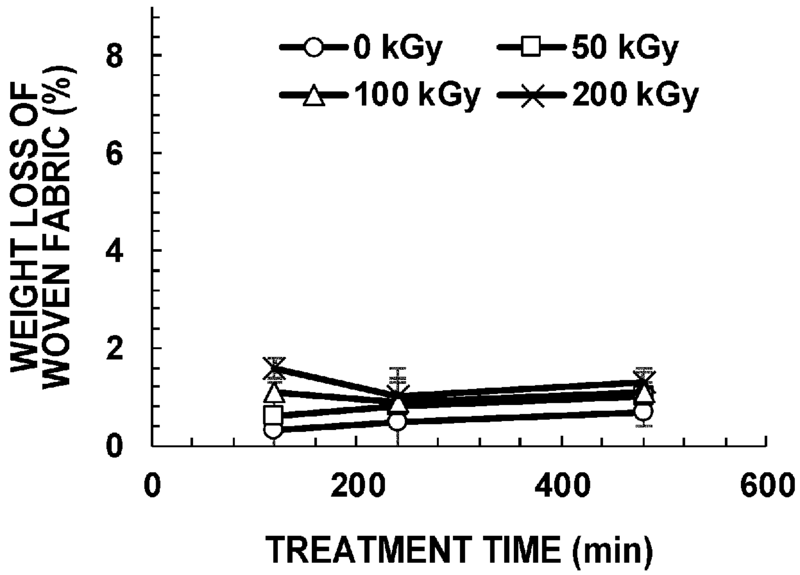
0 kGy
50 kGy
100 kGy
200 kGy
WEIGHT LOSS OF WOVEN FABRIC (%)
8
6
4
2
0
0
200
400
600
TREATMENT TIME (min)

(a-2)

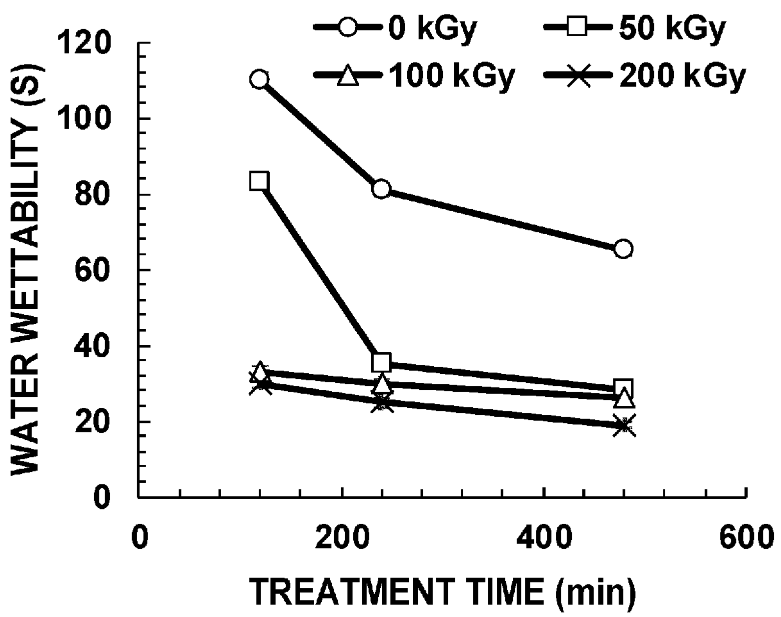
0 kGy
50 kGy
100 kGy
200 kGy
WATER WETTABILITY (S)
120
100
80
60
40
20
0
0
200
400
600
TREATMENT TIME (min)

# Fig. 6

(b-1)

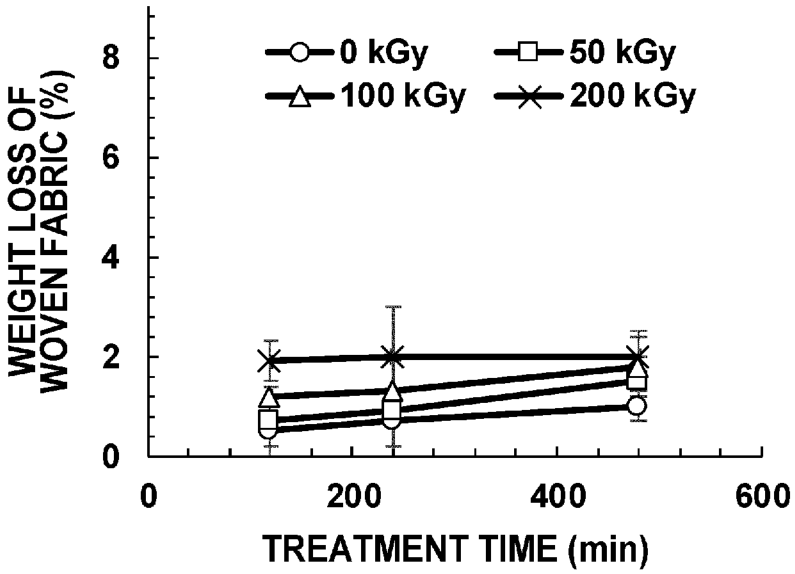
0 kGy
50 kGy
100 kGy
200 kGy
WEIGHT LOSS OF WOVEN FABRIC (%)
0
2
4
6
8
0
200
400
600
TREATMENT TIME (min)

(b-2)

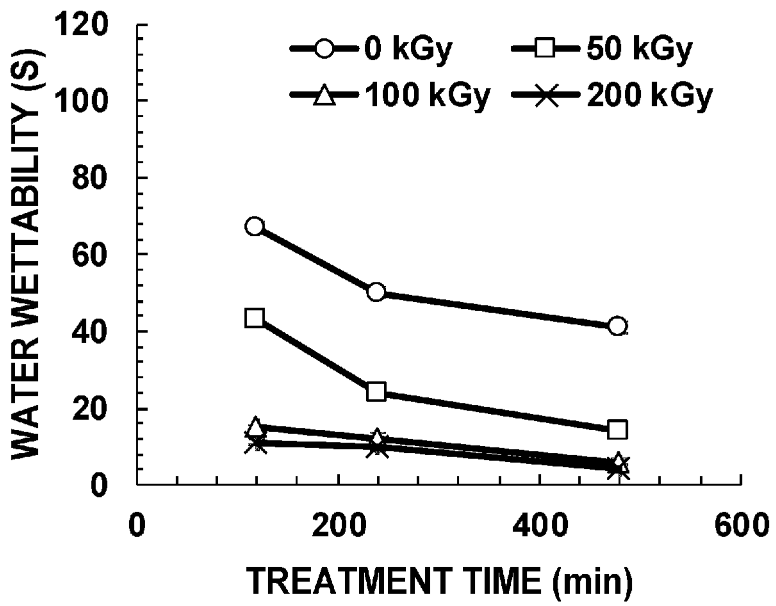
0 kGy
50 kGy
100 kGy
200 kGy
WATER WETTABILITY (S)
0
20
40
60
80
100
120
0
200
400
600
TREATMENT TIME (min)

# Fig. 7

(c-1)

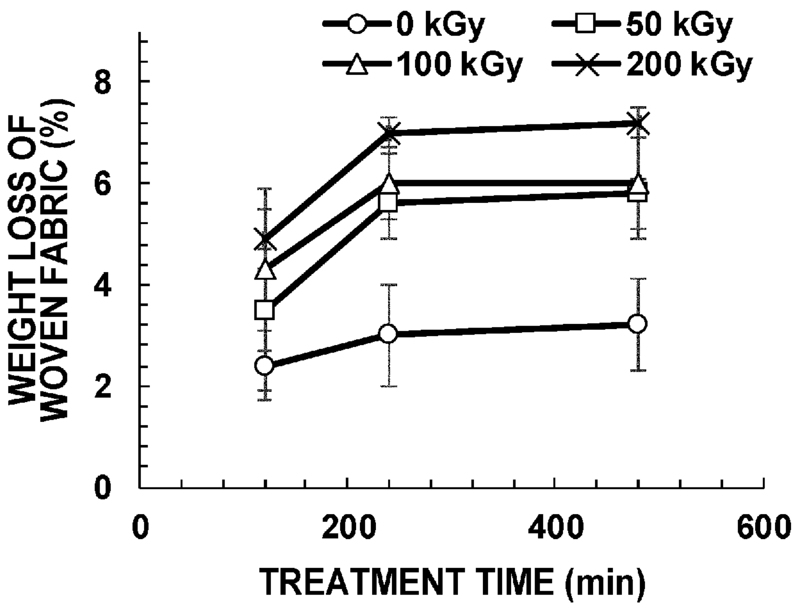
0 kGy
50 kGy
100 kGy
200 kGy
WEIGHT LOSS OF WOVEN FABRIC (%)
0
2
4
6
8
0
200
400
600
TREATMENT TIME (min)

(c-2)

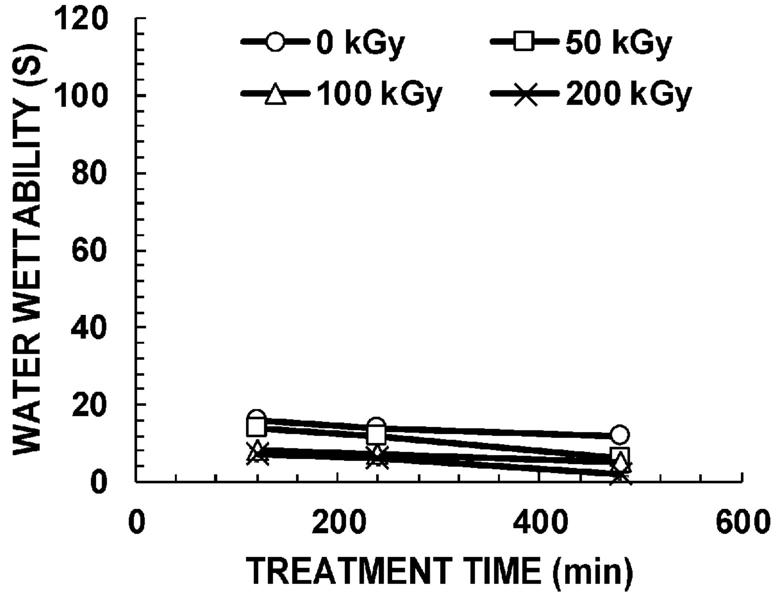
0 kGy
50 kGy
100 kGy
200 kGy
WATER WETTABILITY (S)
0
20
40
60
80
100
120
0
200
400
600
TREATMENT TIME (min)

# Fig. 8

(d-1)

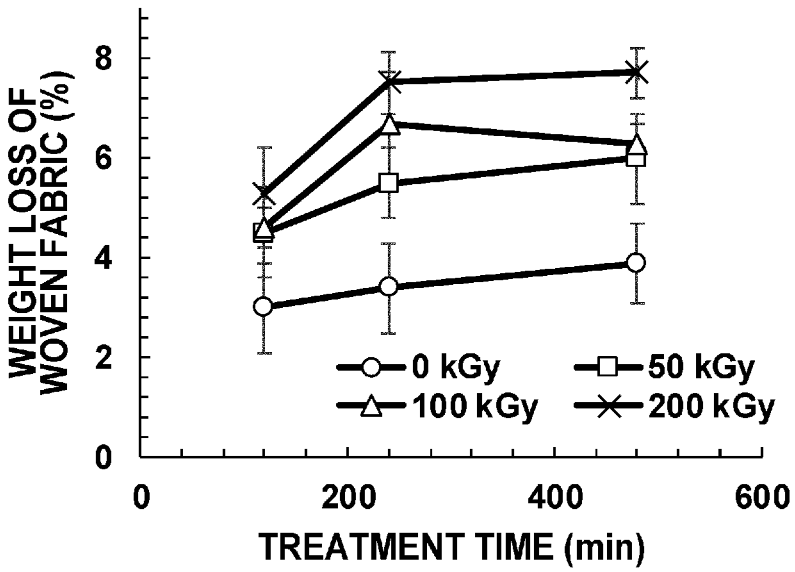
WEIGHT LOSS OF WOVEN FABRIC (%)
8
6
4
2
0
0
200
400
600
TREATMENT TIME (min)
0 kGy
50 kGy
100 kGy
200 kGy

(d-2)

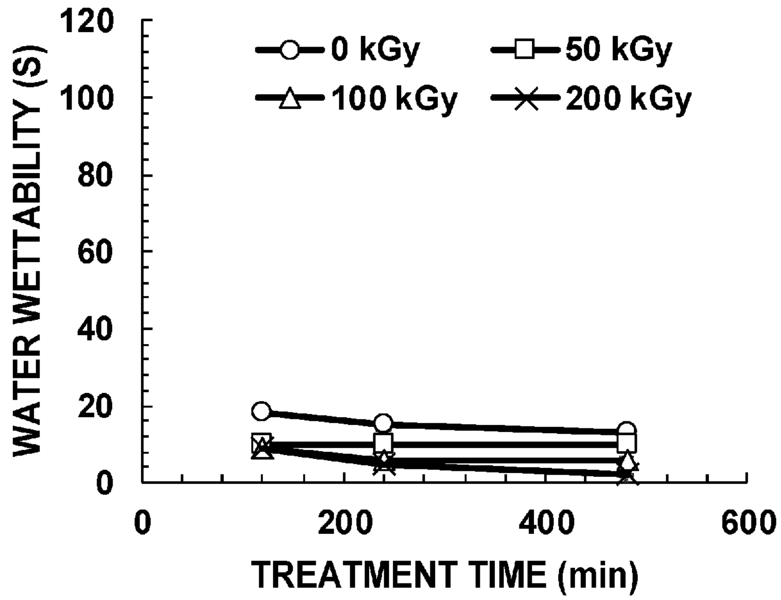
WATER WETTABILITY (S)
120
100
80
60
40
20
0
0
200
400
600
TREATMENT TIME (min)
0 kGy
50 kGy
100 kGy
200 kGy

Fig. 9

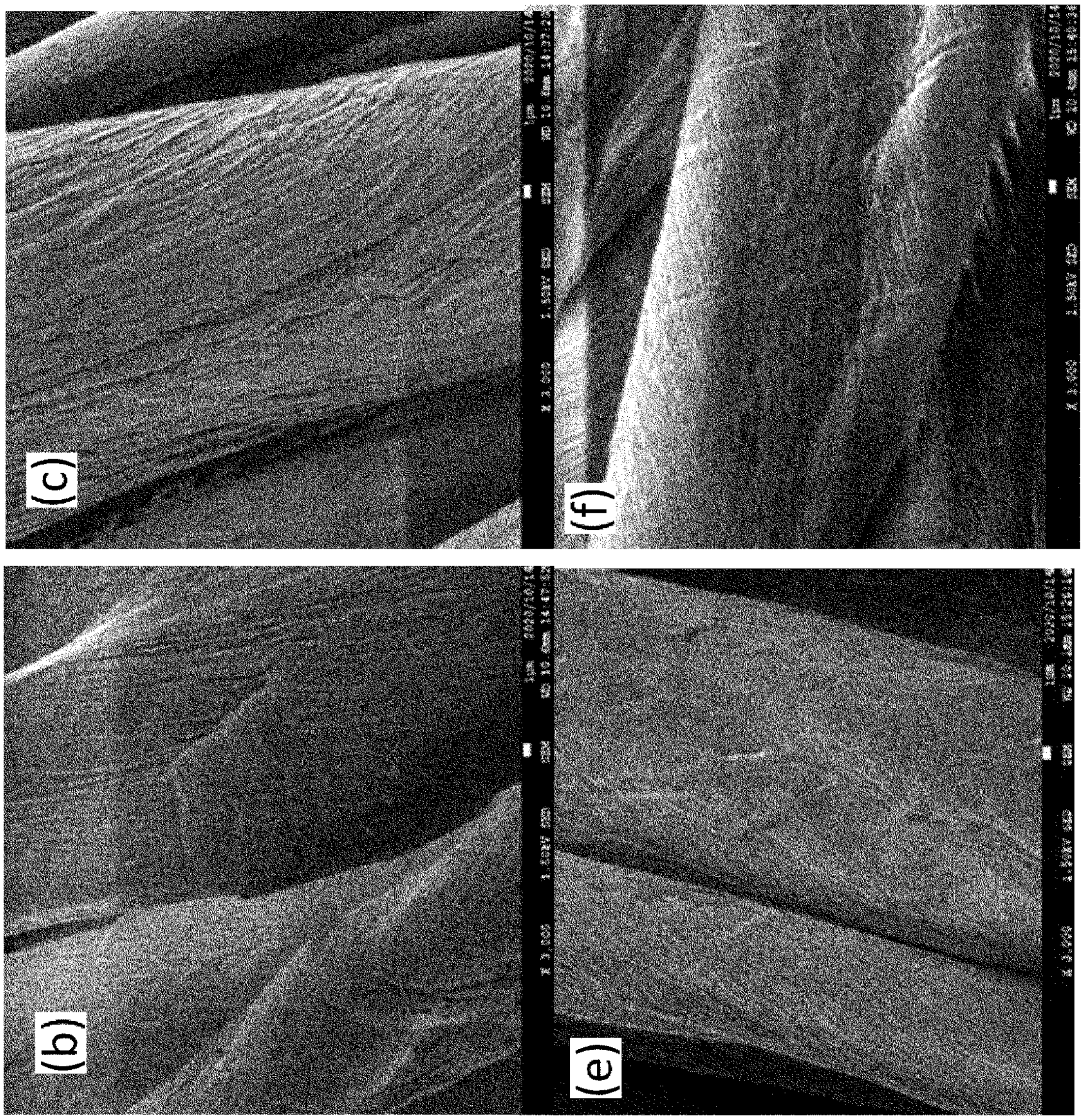

Fig. 10

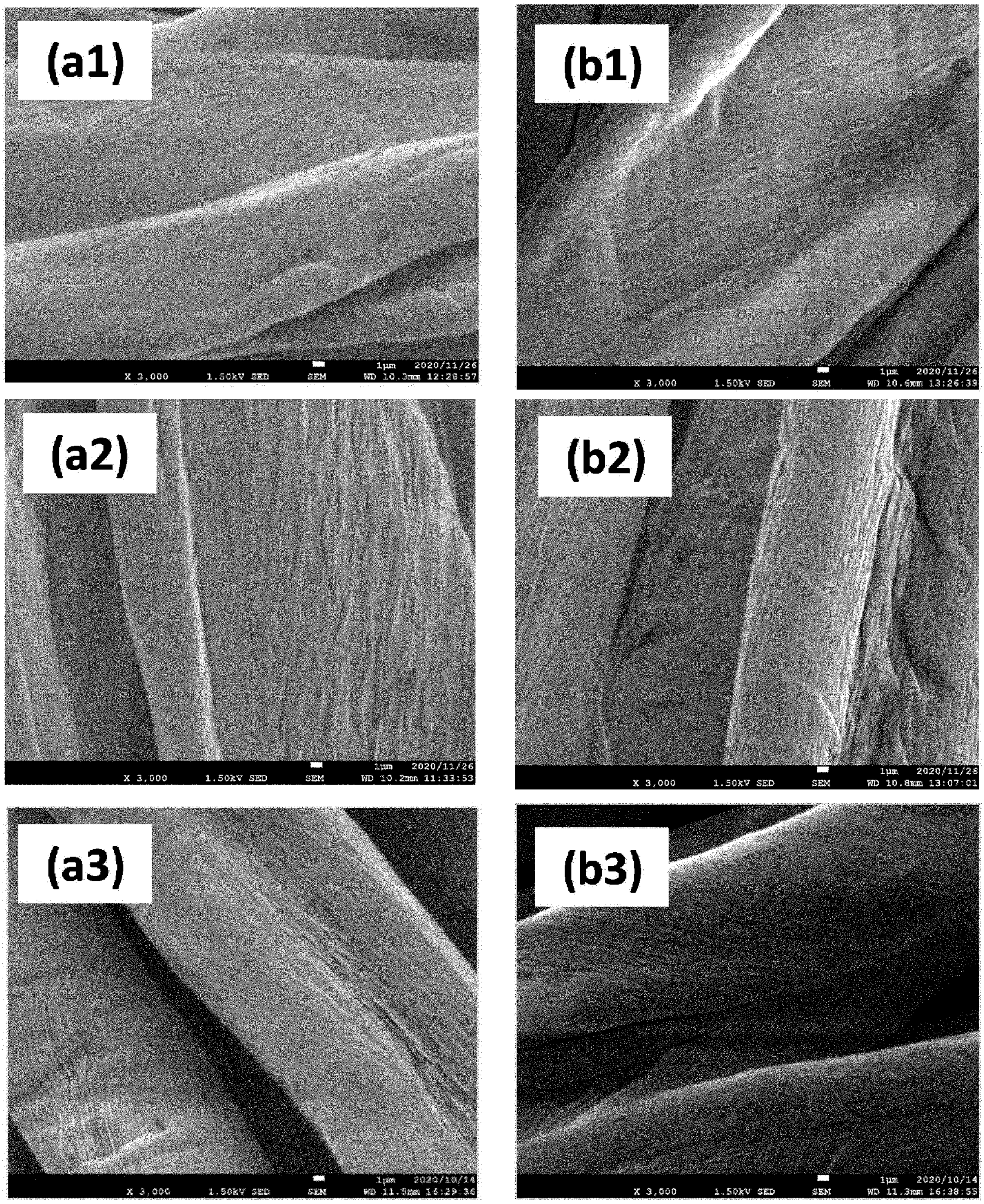

Fig. 11

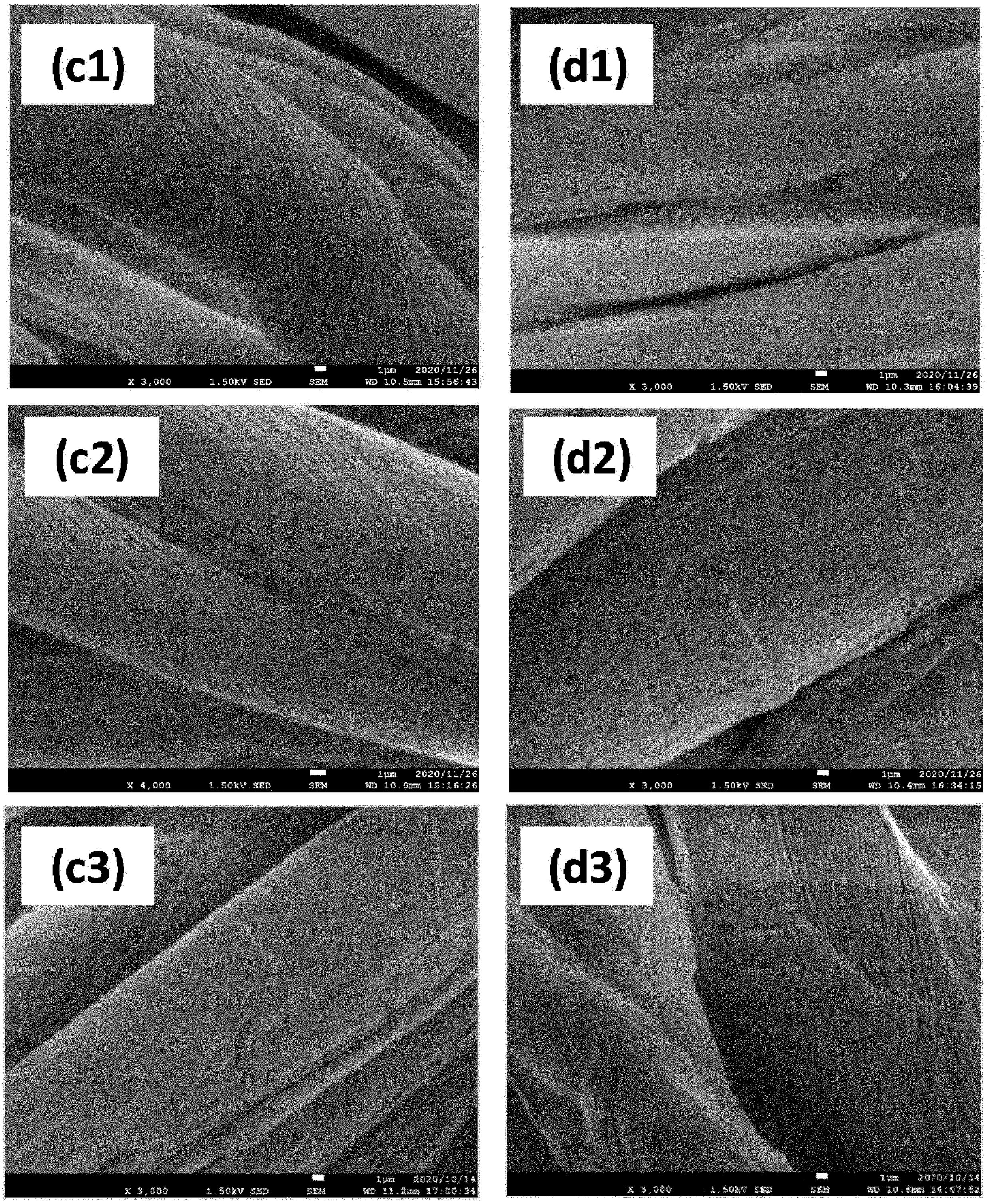

Fig. 12

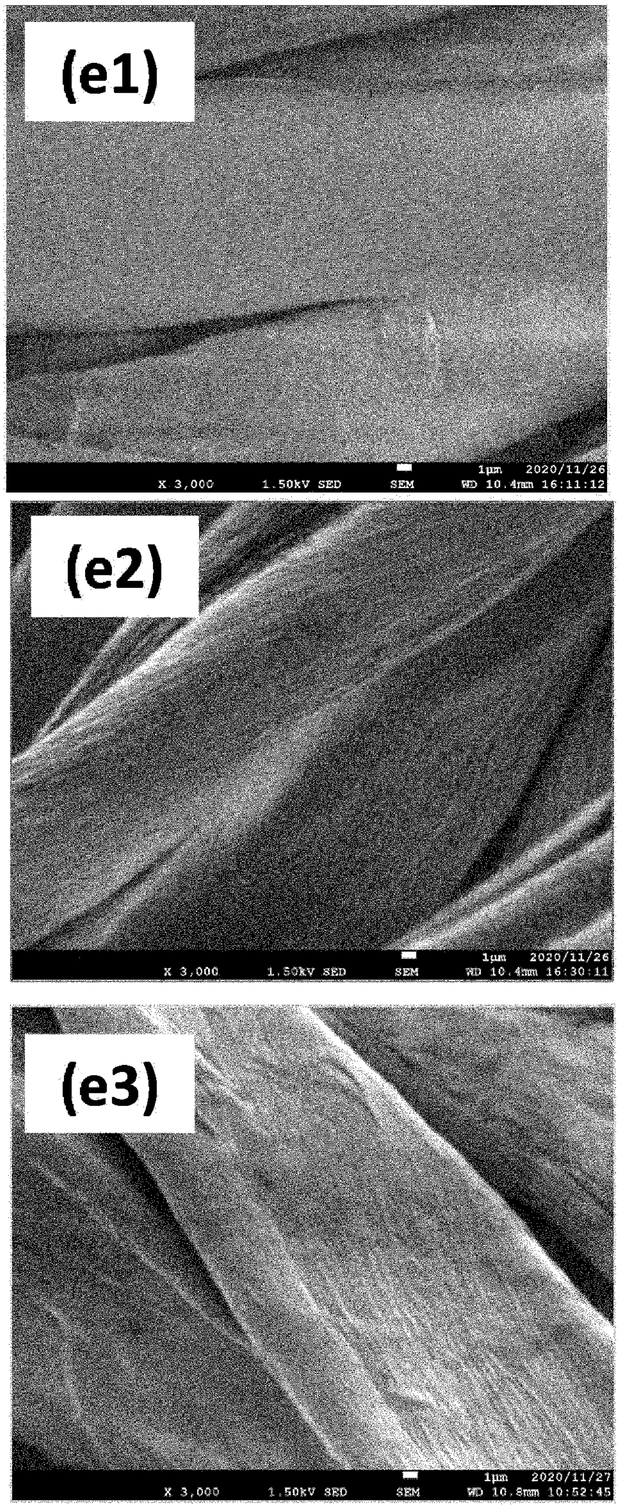
(e1)
X 3,000 1.50kV SED SEM 1μm 2020/11/26 WD 10.4mm 16:11:12
(e2)
X 3,000 1.50kV SED SEM 1μm 2020/11/26 WD 10.4mm 16:30:11
(e3)
X 3,000 1.50kV SED SEM 1μm 2020/11/27 WD 10.8mm 10:52:45

## INTERNATIONAL SEARCH REPORT

International application No. **PCT/JP2022/022291**

**A. CLASSIFICATION OF SUBJECT MATTER**

***D06L 1/02***(2006.01)i; ***D06M 10/00***(2006.01)i
FI: D06L1/02; D06M10/00 J

According to International Patent Classification (IPC) or to both national classification and IPC

**B. FIELDS SEARCHED**

Minimum documentation searched (classification system followed by classification symbols)

D06L1/00-4/75, D06M10/00-11/84, D06M16/00, D06M19/00-23/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 104328648 A (SOOCHOW UNIVERSITY) 04 February 2015 (2015-02-04)<br>claims 1-7, paragraphs [0019], [0073] | 1-7<br>3-6, 8 |
| Y | JP 08-013329 A (DAIWABO CO LTD) 16 January 1996 (1996-01-16)<br>claims, paragraphs [0009], [0023], [0024] | 8 |
| X<br>Y | US 6183521 B1 (INDUSTRIAL TECHNOLOGY RESEARCH INSTITUTE) 06 February 2001 (2001-02-06)<br>claims | 1, 2, 7<br>3-6, 8 |
| X<br>Y | CN 109056236 A (SHAOXING JINGWEI SUPERCRITICAL PRINTING AND DYEING TECHNOLOGY CO., LTD.D.) 21 December 2018 (2018-12-21)<br>claim 1 | 1, 2<br>3-6, 8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 July 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/022291**

**C. DOCUMENTS CONSIDERED TO BE RELEVANT**

| Category* | Citation of document, with indication, where appropriate, of the relevant passages | Relevant to claim No. |
|---|---|---|
| X | CN 109267315 A (SHAOXING JINGWEI SUPERCRITICAL PRINTING AND DYEING TECHNOLOGY CO., LTD.) 25 January 2019 (2019-01-25) claim 1 | 1, 2 |
| Y | | 3-6, 8 |
| X | WO 2012/132867 A1 (NITTO BOSEKI CO., LTD.) 04 October 2012 (2012-10-04) claims | 1, 2 |
| Y | | 3-6, 8 |
| X | US 2016/0244911 A1 (NIKE, INC.) 25 August 2016 (2016-08-25) claims, paragraphs [0027], [0036], [0222], [0225]-[0241] | 1-7 |
| Y | | 8 |
| Y | JP 2004-076190 A (KOBE STEEL LTD) 11 March 2004 (2004-03-11) claims, paragraph [0047], examples | 3-6 |
| A | JP 04-281088 A (KIMBERLY CLARK CORP) 06 October 1992 (1992-10-06) | 1-8 |
| A | JP 2002-004169 A (MISHIMA, Kenji) 09 January 2002 (2002-01-09) | 1-8 |

Form PCT/ISA/210 (second sheet) (January 2015)

**INTERNATIONAL SEARCH REPORT**
**Information on patent family members**

International application No.
**PCT/JP2022/022291**

| Patent document cited in search report | Publication date (day/month/year) | Patent family member(s) | Publication date (day/month/year) |
|---|---|---|---|
| CN 104328648 A | 04 February 2015 | (Family: none) | |
| JP 08-013329 A | 16 January 1996 | (Family: none) | |
| US 6183521 B1 | 06 February 2001 | TW 426775 B | |
| CN 109056236 A | 21 December 2018 | (Family: none) | |
| CN 109267315 A | 25 January 2019 | (Family: none) | |
| WO 2012/132867 A1 | 04 October 2012 | TW 201247963 A | |
| US 2016/0244911 A1 | 25 August 2016 | WO 2016/134252 A1<br>KR 10-2017-0118215 A<br>EP 3259399 A1<br>CN 107548421 A | |
| JP 2004-076190 A | 11 March 2004 | (Family: none) | |
| JP 04-281088 A | 06 October 1992 | US 5009745 A<br>EP 480476 A1<br>KR 10-1992-0008272 A | |
| JP 2002-004169 A | 09 January 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **G.I. MANTANIS ; R.A. YOUNG ; R.M. ROWELL.** Swelling of compressed cellulose fiber webs in organic liquids. *Cellulose,* 1995, vol. 2, 1-22